# EUROPEAN PATENT APPLICATION

(11) **EP 4 517 787 A1**
(43) Date of publication of application: **05.03.2025**
(21) Application number: 23796344.2
(22) Date of filing: 24.04.2023
(51) Int. Cl.: H01B 13/00, C01B 25/14, C22B 3/04, C22B 7/00, C22B 26/12

(54) **METHOD FOR PRODUCING A SULFIDE-BASED SOLID ELECTROLYTE, LITHIUM HALIDE-CONTAINING COMPOSITION, AND A LITHIUM SULFIDE-CONTAINING COMPOSITION**

(30) Priority: 27.04.2022 JP 2022073771
(71) Applicant: AGC INC., Chiyoda-ku, Tokyo 1008405 (JP)
(72) Inventor: ANDO Ryota, Tokyo 100-8405 (JP); SEKI Hidenobu, Tokyo 100-8405 (JP)
(74) Representative: Müller-Boré & Partner Patentanwälte PartG mbB
(86) International application number: PCT/JP2023/016175
(87) International publication number: WO 2023/210604

(57) **Abstract**

The present invention pertains to a method for producing a sulfide-based solid electrolyte, the method including heating/melting a raw material under an elemental sulfur-containing gas atmosphere. The raw material includes a source of lithium obtained using an aqueous solution containing Li and SO₄, and the ratio of the SO₄ to the Li in the aqueous solution is 0.1 mol% or greater.

## Description

### TECHNICAL FIELD

The present invention relates to a method for producing a sulfide-based solid electrolyte. Further, the present invention also relates to a lithium halide-containing composition and a lithium sulfide-containing composition used in the production of a sulfide-based solid electrolyte.

### BACKGROUND ART

Lithium-ion secondary batteries are widely used in portable electronic devices such as mobile phones and notebook computers.

In the related art, a liquid electrolyte has been used in a lithium-ion secondary battery, but there is a concern of liquid leakage, ignition, and the like, and it has been necessary to increase the size of a case for safety design. It has also been desired to improve the shortage of battery life and the narrow operating temperature range.

In contrast, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of the case.

The solid electrolytes are roughly classified into sulfide-based solid electrolytes and oxide-based solid electrolytes. Sulfide ions constituting the sulfide-based solid electrolytes have higher polarizability and higher ion conductivity than those of oxide ions constituting the oxide-based solid electrolytes. Examples of the sulfide-based solid electrolyte include a sulfide-based solid electrolyte containing a lithium element, a sulfur element, and a phosphorus element. As a raw material for the sulfide-based solid electrolyte, for example, a raw material in which components serving as element sources for elements contained in the sulfide-based solid electrolyte are mixed is used.

Recovery of the lithium element from used lithium-ion secondary batteries and a reuse thereof as battery materials are being considered. For example, when a positive electrode material of a lithium-ion secondary battery that uses a liquid electrolyte is sintered, lithium becomes lithium oxide (Li₂O), and when lithium oxide is immersed in water, lithium oxide becomes lithium hydroxide (LiOH) and lithium ions dissolve into the water. This method allows extraction of the lithium element by separating the lithium element from non-aqueous metallic elements such as Co, Mn, and Ni.

On the other hand, water-soluble Al(OH)₄⁻, F⁻, SO₄²⁻, PO₄³⁻, and the like, which may be contained in the used lithium-ion secondary batteries, are extracted into the water together with the lithium ions. Therefore, methods for performing purification by removing impurities from such an extraction liquid of the lithium element or concentrating the lithium element by membrane separation have been investigated (for example, Patent Literatures 1 to 3).

### CITATION LIST

### PATENT LITERATURE

Patent Literature 1: JP2011-154811A
Patent Literature 2: JP2019-81953A
Patent Literature 3: JP2012-200666A

### SUMMARY OF INVENTION

### TECHNICAL PROBLEM

In the related art, when the lithium element is recovered by a method for extracting the lithium element into an aqueous solution from the used lithium-ion secondary batteries, it is thought to be difficult to obtain a lithium source directly from the extraction liquid and use the lithium source as a material for lithium-ion secondary batteries. That is, as in Patent Literatures 1 to 3, it is assumed that the purification is performed by first removing the impurities from such an extraction liquid or concentrating the lithium element by the membrane separation.

The present inventors have found that the same applies to the case where recovered lithium is used as a raw material for a sulfide-based solid electrolyte. That is, it has been found that if the lithium source is obtained directly from the extraction liquid and used for synthesizing the sulfide-based solid electrolyte by a general solid phase reaction, the synthesis may not proceed due to the impurities inhibiting the reaction, and the reaction may take a long time, or homogeneous synthesis may not be possible, resulting in insufficient properties of the obtained sulfide-based solid electrolyte.

However, a purification process for the extraction liquid requires a lot of time and energy, and a membrane used for separation is expensive, so that a cost is likely to increase and the productivity is poor.

Therefore, an object of the present invention is to provide a method for producing a sulfide-based solid electrolyte in which an influence of impurities is prevented and lithium can be efficiently reused even when a lithium source obtained from an aqueous solution containing lithium and the impurities is directly used as a raw material. Further, another object of the present invention is to provide a lithium halide-containing composition and a lithium sulfide-containing composition that are suitably used for producing the above-mentioned sulfide-based solid electrolyte.

### SOLUTION TO PROBLEM

As a result of intensive studies, the present inventors have found that, according to a method for heating and melting a raw material under a gas atmosphere containing a sulfur element, even if the raw material contains a predetermined amount of the above-mentioned impurities, the influence of the impurities is prevented, and a sulfide-based solid electrolyte can be suitably produced, and have completed the present invention.

That is, the present invention relates to the following 1 to 12.
1. A method for producing a sulfide-based solid electrolyte, the method including heating and melting a raw material under a gas atmosphere containing a sulfur element,
   in which the raw material contains a lithium source obtained by using an aqueous solution containing Li and SO₄, and
   a ratio of SO₄ to Li is 0.1 mol% or more in the aqueous solution.
2. The method for producing a sulfide-based solid electrolyte according to the 1,
   in which the aqueous solution further contains at least one of Al and F, and
   in the aqueous solution, at least one of a ratio of Al to Li and a ratio of F to Li is 0.01 mol% or more.
3. The method for producing a sulfide-based solid electrolyte according to the 1 or 2, in which the aqueous solution includes an extraction liquid obtained by immersing a processed product of a used lithium-ion secondary battery in water.
4. The method for producing a sulfide-based solid electrolyte according to the 3, in which the aqueous solution is obtained by adjusting a content ratio of one or more components selected from the group consisting of SO₄, Al, and F to Li in the extraction liquid.
5. A method for producing a sulfide-based solid electrolyte, the method including:
   obtaining a lithium source using an aqueous solution containing Li and SO₄; and
   heating and melting a raw material containing the lithium source under a gas atmosphere containing a sulfur element,
   in which a ratio of SO₄ to Li is 0.1 mol% or more in the aqueous solution.
6. The method for producing a sulfide-based solid electrolyte according to the 5,
   in which the aqueous solution further contains at least one of Al and F, and
   in the aqueous solution, at least one of a ratio of Al to Li and a ratio of F to Li is 0.01 mol% or more.
7. The method for producing a sulfide-based solid electrolyte according to the 5 or 6, in which the aqueous solution includes an extraction liquid obtained by immersing a processed product of a used lithium-ion secondary battery in water.
8. The method for producing a sulfide-based solid electrolyte according to the 7, further including preparing the aqueous solution,
   in which the preparation of the aqueous solution includes adjusting a content ratio of one or more components selected from the group consisting of SO₄, Al, and F to Li in the extraction liquid.
9. A lithium halide-containing composition containing a lithium halide, in which the lithium halide-containing composition contains 10 mass% or less of SO₄, and is used for producing a sulfide-based solid electrolyte.
10. The lithium halide-containing composition according to the 9,
   in which a halogen element constituting the lithium halide is a halogen element other than F, and
   the lithium halide-containing composition further contains at least one of Al and F.
11. A lithium sulfide-containing composition containing a lithium sulfide, in which the lithium sulfide-containing composition contains more than 0.5 mass% and 10 mass% or less of SO₄, and is used for producing a sulfide-based solid electrolyte.
12. The lithium sulfide-containing composition according to the 11, containing at least one of Al and F.

### ADVANTAGEOUS EFFECTS OF INVENTION

According to the present invention, even when a raw material contains a predetermined amount of the above-mentioned impurities, an influence of the impurities is prevented, and a sulfide-based solid electrolyte can be suitably produced. Accordingly, a lithium source obtained from an aqueous solution containing lithium and the impurities can be used directly as the raw material to produce the sulfide-based solid electrolyte. Since there is no need for purification treatment such as membrane separation of the aqueous solution, lithium can be reused efficiently. It is also possible to provide a lithium halide-containing composition or a lithium sulfide-containing composition that is the raw material suitable for producing the above-mentioned sulfide-based solid electrolyte.

### BRIEF DESCRIPTION OF DRAWINGS

FIG. 1 is a flowchart illustrating a production method according to an embodiment of the present invention.
FIG. 2 is a flowchart illustrating the production method according to the embodiment of the present invention.
FIG. 3 is a flowchart illustrating a production method according to the embodiment of the present invention.
FIG. 4 is a graph showing a relationship between a SO₄ concentration in lithium bromide obtained in each of Examples 1 to 6 and lithium-ion conductivity of a sulfide-based solid electrolyte produced using the same.
FIG. 5 is a graph showing a relationship between a SO₄ concentration in lithium bromide obtained in each of Example 1 and Examples 7 to 10 and lithium-ion conductivity of a sulfide-based solid electrolyte produced using the same.
FIG. 6 is a graph showing a relationship between a SO₄ concentration in each of lithium bromide obtained in Example 1 and lithium sulfide obtained in Examples 12 to 15 and lithium-ion conductivity of the sulfide-based solid electrolyte produced using the same.

### DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

A production method according to the present invention is a method for producing a sulfide-based solid electrolyte including heating and melting a raw material under a gas atmosphere containing a sulfur element, in which the raw material contains a lithium source obtained by using an aqueous solution containing Li and SO₄, and a ratio of SO₄ to Li is 0.1 mol% or more in the aqueous solution.

### (Sulfide-based Solid Electrolyte)

In the method for producing a sulfide-based solid electrolyte according to an embodiment of the present invention (hereinafter, also referred to as the present production method), a type and a composition of the produced sulfide-based solid electrolyte are not particularly limited, and may be appropriately selected depending on applications, desired physical properties, and the like. The sulfide-based solid electrolyte produced by the present production method contains at least a lithium element and a sulfur element. More specific examples of the sulfide-based solid electrolyte include a sulfide-based solid electrolyte containing Li, P, and S, and a sulfide-based solid electrolyte containing Li, P, S, and Ha. Here, Ha represents at least one element selected from halogen elements. Specifically, Ha is, for example, at least one element selected from the group consisting of F, Cl, Br, and I. In order to obtain an argyrodite crystal structure, Ha more preferably includes at least one of Cl and Br, still more preferably includes Cl, and yet still more preferably elemental Cl or a mixture of Cl and Br.

Depending on the purpose, the sulfide-based solid electrolyte may be an amorphous sulfide-based solid electrolyte, a sulfide-based solid electrolyte having a specific crystal structure, or a sulfide-based solid electrolyte including a crystal phase and an amorphous phase.

The sulfide-based solid electrolyte preferably includes a crystal structure from the viewpoint of improving lithium-ion conductivity. In the case where the sulfide-based solid electrolyte contains a crystal structure, a crystal contained in the sulfide-based solid electrolyte is preferably an ion-conductive crystal. Specifically, the ion-conductive crystal is a crystal having lithium-ion conductivity of preferably more than 10⁻⁴ S/cm, and more preferably more than 10⁻³ S/cm.

More specifically, examples of the sulfide-based solid electrolyte include a sulfide-based solid electrolyte containing an LGPS crystal such as Li₁₀GeP₂S₁₂, a sulfide-based solid electrolyte containing an argyrodite crystal such as Li₆PS₅Cl₁, Li-P-S-Ha-based crystallized glass, and LPS crystallized glass such as Li₇P₃S₁₁. The sulfide-based solid electrolyte may be a combination of these, or may contain a plurality of types of crystals having different compositions or crystal structures. From the viewpoint of excellent lithium ion conductivity, a sulfide-based solid electrolyte containing an argyrodite crystal is preferable as the sulfide-based solid electrolyte.

When the sulfide-based solid electrolyte contains crystals, the crystal structure thereof preferably contains an argyrodite type from the viewpoint of symmetry of the crystal structure. Highly symmetric crystals tend to allow lithium-ion conduction paths to extend in three dimensions, which is favorable when a powder is formed.

In order to obtain the argyrodite crystal structure, the crystal phase includes Ha in addition to Li, P, and S. Ha more preferably includes at least one of Cl and Br, still more preferably includes Cl, and is even more preferably elemental Cl or a mixture of Cl and Br.

The argyrodite crystal can be defined as including Li, P, S, and Ha, and having peaks at positions of 2θ = 15.7 ± 0.5° and 30.2 ± 0.5° in an X-ray powder diffraction (XRD) pattern. In addition to the above peaks, the XRD pattern preferably has a peak at a position of 2θ = 18.0 ± 0.5°, and more preferably has a peak at a position of 2θ = 25.7 ± 0.5°.

The sulfide-based solid electrolyte obtained by the present production method may contain impurities derived from the lithium source to be described below. Such impurities include, for example, Li₂SO₄, Li₂PO₄, Al₂O₃, LiF, and AlF₃. Further, elements derived from the impurities in the lithium source may be incorporated into the sulfide solid electrolyte crystals or may exist in an amorphous state. The sulfide-based solid electrolyte may contain, for example, 0 mass% to 10 mass% in total of these, and preferably 0 mass% to 5 mass%.

When F is contained in the sulfide-based solid electrolyte, oxidation resistance of the sulfide-based solid electrolyte may be improved. From this viewpoint, the sulfide-based solid electrolyte may contain 0.01 mol% to 10 mol% of an F element relative to the Li element, and preferably 0.1 mol% to 5 mol%. Here, a content of the F element relative to the Li element may be 0.01 mol% or more, and preferably 0.1 mol% or more, and may be 10 mol% or less, and preferably 5 mol% or less.

When Al is contained as Al₂O₃, crystallization of the sulfide solid electrolyte is promoted, and the lithium-ion conductivity may be improved. From this viewpoint, the sulfide-based solid electrolyte may contain 0.01 mol% to 10 mol% of an Al element relative to the Li element, and preferably 0.1 mol% to 5 mol%. Here, a content of the Al element relative to the Li element may be 0.01 mol% or more, and preferably 0.1 mol% or more, and may be 10 mol% or less, and preferably 5 mol% or less.

A composition of the sulfide-based solid electrolyte is determined by composition analysis using ICP emission spectrometry, atomic absorption, ion chromatography, or the like. Further, a type of the crystal contained in the sulfide-based solid electrolyte can be analyzed from an X-ray powder diffraction (XRD).

### (Raw Material)

The raw material used in the present production method can be any of the above-mentioned various known raw materials for sulfide-based solid electrolytes. For example, when the sulfide-based solid electrolyte contains Li, P, and S, the raw material contains lithium element (Li), sulfur element (S), and phosphorus element (P). As such a raw material, Li-containing substances (components), such as elemental Li or Li-containing compounds, S-containing substances (components), such as elemental S or S-containing compounds, P-containing substances (components), such as elemental P or P-containing compounds, and the like can be used in appropriate combination. The Li-containing compound, the S-containing compound, and the P-containing compound may be a compound containing two or more elements selected from Li, S, and P. For example, phosphorus pentasulfide (P₂S₅) may be used as a compound serving as both the S-containing compound and the P-containing compound.

Examples of the Li-containing substances include lithium compounds such as lithium sulfide (Li₂S), lithium carbonate (Li₂CO₃), lithium oxide (Li₂O), lithium hydroxide (LiOH), and lithium halides (LiHa), and metallic lithium. From the viewpoint of ease of handling, lithium sulfide is preferably used.

On the other hand, since lithium sulfide is expensive, it is preferable to use a lithium compound other than lithium sulfide, metallic lithium, or the like from the viewpoint of reducing a production cost of the sulfide-based solid electrolyte. Specifically, in this case, the raw material preferably contains one or more selected from the group consisting of metallic lithium, lithium carbonate (Li₂CO₃), lithium oxide (Li₂O), and lithium hydroxide (LiOH) as the Li-containing substance. These substances may be used alone or in combination of two or more kinds thereof. In the present production method, the raw material includes the Li-containing substance, and the Li-containing substance includes a lithium source obtained by a predetermined method to be described below.

Examples of the S-containing substances include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (FeS, Fe₂S₃, FeS₂, Fe₁₋ₓS, or the like), bismuth sulfide (Bi₂S₃), and copper sulfides (CuS, Cu₂S, Cu₁₋ₓS, or the like). The S-containing substance is preferably phosphorus sulfide, and more preferably phosphorus pentasulfide (P₂S₅), from the viewpoint of preventing containing of elements other than the elements constituting the target sulfide-based solid electrolyte. These substances may be used alone or in combination of two or more kinds thereof. Phosphorus sulfide can be considered as a compound that serves as both the S-containing substance and the P-containing substance.

Examples of the P-containing substances include phosphorus sulfides such as phosphorus trisulfide (P₂S₃) and phosphorus pentasulfide (P₂S₅), phosphorus compounds such as sodium phosphate (Na₃PO₄), and elemental phosphorus. The P-containing substance is preferably phosphorus sulfide, and more preferably phosphorus pentasulfide (P₂S₅), from the viewpoint of preventing containing of elements other than the elements constituting the target sulfide-based solid electrolyte. These substances may be used alone or in combination of two or more kinds thereof.

In the present production method, the raw material can be obtained by appropriately mixing, for example, the above-mentioned substances depending on the composition of the desired sulfide-based solid electrolyte. A mixing ratio is not particularly limited, but for example, a molar ratio Li/P of Li to P in the raw material is preferably 65/35 or more, and more preferably 70/30 or more. Further, the molar ratio Li/P is preferably 88/12 or less.

Examples of a preferred combination of the above compounds include a combination of Li₂S and P₂S₅. When Li₂S and P₂S₅ are combined, the molar ratio Li/P of Li to P is preferably from 65/35 to 88/12, and more preferably from 70/30 to 88/12. By adjusting the mixing ratio so that the amount of P₂S₅ is relatively smaller than Li₂S, it becomes easier to prevent elimination of sulfur and phosphorus components during heat treatment due to a smaller boiling point of P₂S₅ compared to a melting point of Li₂S.

The raw material in the present production method may contain further substances (compounds and the like) in addition to the above substances depending on the composition of the desired sulfide-based solid electrolyte or as additives or the like.

For example, when producing a sulfide-based solid electrolyte containing a halogen element such as F, Cl, Br or I, the raw material preferably contains a halogen element (Ha). In this case, the raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of preventing containing of elements other than the elements constituting the target sulfide-based solid electrolyte. These compounds may be used alone or in combination of two or more kinds thereof.

The lithium halide may also be a Li-containing compound. When the raw material contains the lithium halide, some or all of Li in the raw material may be derived from the lithium halide.

When the raw material contains the halogen element, a molar equivalent of Ha relative to P in the raw material is preferably 0.2 molar equivalents to 4 molar equivalents, more preferably 0.5 molar equivalents to 3 molar equivalents. Here, the molar equivalent of Ha is preferably 0.2 molar equivalents or more, and more preferably 0.5 molar equivalents or more, from the viewpoint of lowering a melting point when the raw material is heated and melted. Further, from the viewpoint of improving stability of the resulting sulfide-based solid electrolyte, the molar equivalent of Ha is preferably 4 molar equivalents or less, and more preferably 3 molar equivalents or less.

From the viewpoint of improving a glass formation state of the resulting sulfide-based solid electrolyte, the raw material preferably contains sulfides such as SiS₂, B₂S₃, GeS₂, and Al₂S₃. By facilitating the glass formation, when glass is obtained by rapid cooling, glass can be obtained even when a cooling rate is reduced, thereby reducing a load on an apparatus. From the viewpoint of imparting moisture resistance to the sulfide-based solid electrolyte, it is also preferable that oxides such as SiO₂, B₂O₃, GeO₂, Al₂O₃, P₂O₅ are contained. These compounds may be used alone or in combination of two or more kinds thereof.

An addition amount of these compounds is preferably 0.1 weight% to 50 weight%, and more preferably 0.5 weight% to 40 weight% with respect to a total amount of the raw material. Here, the addition amount is preferably 0.1 weight% or more, and more preferably 0.5 weight% or more with respect to the total amount of the raw material. The addition amount is preferably 50 weight% or less, and more preferably 40 weight% or less.

As the raw material, the above-mentioned various substances can be used in combination. When a plurality of substances are combined as the raw material, the raw material may be mixed using, for example, a known mixer. As the mixer, for example, a V-type mixer, a W-type mixer, a ribbon-type mixer, or the like can be used.

In the present production method, the sulfide-based solid electrolyte is obtained by heating and melting the raw material, but the raw material may be subjected to a heat treatment in advance before the heating and melting. By undergoing the heat treatment, the raw material can be heated and melted from a state where the composition thereof is closer to a target composition, making it easier to control the composition. A part of the raw material may be subjected to the heat treatment and then mixed with the remaining raw material. The raw material after the heat treatment may contain a compound containing Li, P and S, such as Li₄P₂S₆ and Li₃PS₄. Conditions for the heat treatment are not particularly limited, but it is preferable to hold a temperature at 100°C to 500°C for 0.1 hour to 5 hours, for example.

### (Lithium Source)

The raw material used in the present production method includes a lithium source obtained by using the aqueous solution containing Li and SO₄, and the ratio of SO₄ to Li in such an aqueous solution is 0.1 mol% or more.

The sulfide-based solid electrolyte obtained by the present production method contains at least the lithium element as described above. Therefore, the raw material contains the above-mentioned Li-containing substance (component). Further, the raw material contains the above-mentioned lithium source as at least a part of the Li-containing substance (component).

The lithium source is obtained from the aqueous solution containing Li and SO₄, in which the ratio of SO₄ to Li is 0.1 mol% or more (hereinafter, sometimes referred to as a "specific aqueous solution").

This means the following. That is, the lithium source obtained from the specific aqueous solution refers to a lithium source obtained without undergoing a step of concentrating the lithium element or a step of removing components other than components containing the lithium element by membrane separation or the like in an aqueous solution state, during the process of obtaining the lithium source from the specific aqueous solution. In other words, if an aqueous solution immediately before obtaining the lithium source contains Li and SO₄ and the ratio of SO₄ to Li is 0.1 mol% or more, in the sense that no purification treatment of the aqueous solution by the membrane separation or the like is involved, the lithium source is obtained from the specific aqueous solution. This does not necessarily mean that the specific aqueous solution has never been subjected to any purification treatment of the aqueous solution. That is, the aqueous solution obtained by previously carrying out a process such as membrane separation may also be considered as the specific aqueous solution.

Examples of a method for obtaining the lithium source from the specific aqueous solution include a method for directly obtaining a solid lithium compound from the specific aqueous solution, and a method for synthesizing a further lithium compound using the solid lithium compound obtained from the specific aqueous solution.

Examples of the lithium compound that can be obtained directly from the specific aqueous solution include lithium hydroxide (LiOH), lithium carbonate (Li₂CO₃), and lithium halides (LiHa).

Lithium hydroxide can be obtained, for example, by a method of directly evaporating the specific aqueous solution.

Further, lithium carbonate can be obtained, for example, by a method in which carbonic acid is blown into a specific aqueous solution to cause precipitation. Precipitated lithium carbonate can be recovered by a method of natural drying, a method of drying and solidifying by heating, or a method of solid-liquid separation such as sedimentation separation. Alternatively, lithium carbonate can be obtained by a method in which lithium carbonate is precipitated by adding a carbonate such as sodium carbonate, and can also be obtained by recovering the obtained lithium carbonate by the solid-liquid separation such as sedimentation separation. When lithium carbonate is obtained by a method of precipitating lithium carbonate by blowing carbonic acid into the specific aqueous solution, it is preferable to blow carbonic acid until the pH becomes about 5 to 9. Further, in order to facilitate the precipitation of lithium carbonate, it is preferable to heat the specific aqueous solution, and a temperature thereof is, for example, preferably 80°C to 100°C, and more preferably 80°C to 95°C. Regarding the lithium halide, for example, lithium chloride can be synthesized by mixing the specific aqueous solution with hydrochloric acid, and then obtained by drying the obtained substance.

When the lithium compound is further synthesized using the solid lithium compound obtained from the specific aqueous solution, examples of the obtained lithium compound include lithium hydroxide, lithium sulfide (Li₂S), and lithium halides (LiHa). Here, Ha represents at least one element selected from halogen elements.

Lithium hydroxide is synthesized, for example, by reacting the above-mentioned lithium carbonate with calcium hydroxide.

Lithium sulfide is synthesized, for example, by reacting the above-mentioned lithium hydroxide or lithium carbonate with a gas containing a sulfur element, such as hydrogen sulfide.

The lithium halide can be synthesized, for example, by reacting the above-mentioned lithium hydroxide or lithium carbonate with hydrohalic acid. For example, lithium bromide can be synthesized by reacting lithium carbonate with hydrobromic acid.

A specific type of the lithium source is not particularly limited depending on the type of sulfide-based solid electrolyte to be produced, but from the viewpoints of ease of handling and synthesis, lithium sulfide and the lithium halide are preferred.

Further, the lithium source obtained from the specific aqueous solution may contain, in addition to the above-mentioned lithium compounds, impurities derived from components in the specific aqueous solution. Such impurities include, for example, Li₂SO₄, Li₂PO₄, Al₂O₃, LiF, and AlF₃. The lithium source may contain, for example, 0 mass% to 10 mass% or 0 mass% to 5 mass% in total of these.

The lithium source may contain 0.1 mol% to 2 mol% of SO₄ relative to the Li element, and preferably 0.1 mol% to 1 mol%. Here, a content of SO₄ relative to the Li element may be 0.1 mol% or more, or may be 2 mol% or less, and is preferably 1 mol% or less. Here, SO₄ in the lithium source refers to that contained due to SO₄ (SO₄²⁻) in an aqueous solution, such as SO₄ in Li₂SO₄.

When F is contained in the sulfide-based solid electrolyte, oxidation resistance of the sulfide-based solid electrolyte may be improved. When Al is contained as Al₂O₃ in the sulfide-based solid electrolyte, crystallization of the sulfide solid electrolyte is promoted, and the lithium-ion conductivity may be improved. From this viewpoint, the lithium source may contain 0.01 mol% to 10 mol% of the Al element relative to the Li element, and preferably 0.1 mol% to 5 mol%. Here, a content of the Al element relative to the Li element may be 0.01 mol% or more, and preferably 0.1 mol% or more, and may be 10 mol% or less, and preferably 5 mol% or less. Similarly, from the above viewpoint, the lithium source may contain 0.01 mol% to 10 mol% of the F element relative to the Li element, and preferably 0.1 mol% to 5 mol%. Here, a content of the F element relative to the Li element may be 0.01 mol% or more, and preferably 0.1 mol% or more, and may be 10 mol% or less, and preferably 5 mol% or less.

### (Specific Aqueous Solution)

As described above, the specific aqueous solution is an aqueous solution containing Li and SO₄, in which the ratio of SO₄ to Li is 0.1 mol% or more. A typical example of the specific aqueous solution is an aqueous solution containing an extraction liquid (hereinafter, sometimes simply referred to as "extraction liquid") obtained by immersing a processed product of the used lithium-ion secondary battery in water.

That is, when the processed product obtained by sintering the used lithium-ion secondary battery is immersed in the water, the lithium element (lithium ion) can be extracted into the water, separated from non-aqueous metal elements such as Co, Mn, and Ni. On the other hand, impurities derived from various materials contained in the lithium-ion secondary battery can be extracted into the water along with the lithium element. One of these is SO₄, which is derived from electrolyte additives such as (CF₃SO₂)₂NLi and (C₂F₅SO₂)₂NLi. In the related art, it has been generally believed to be difficult to obtain the lithium source directly from such an aqueous solution containing SO₄ at a predetermined ratio or more relative to Li and to use the lithium source as a material for the lithium-ion secondary battery. Further, the present inventors have found that the same applies to the case where the production of the sulfide-based solid electrolytes is of interest. That is, it has been found that if the lithium source is obtained directly from the aqueous solution containing SO₄ at a predetermined ratio or more relative to Li, and the raw material containing the lithium source is used in a general solid phase reaction, the synthesis may not proceed due to the impurities inhibiting the reaction, and the reaction may take a long time, or homogeneous synthesis may not be possible, resulting in insufficient properties of the obtained sulfide-based solid electrolyte.

On the other hand, as a result of intensive studies, the present inventors have found that according to a method for heating and melting the raw material in the gas atmosphere containing the sulfur element, even if the raw material contains a certain amount of impurities derived from SO₄, the influence of these impurities can be prevented, and the sulfide-based solid electrolyte having excellent lithium-ion conductivity can be obtained, and have completed the present invention. The reason for this is believed to be that when the raw material is heated and melted in the gas atmosphere containing the sulfur element, SO₄ in a melt reacts with excess sulfur present in the melt or in the gas atmosphere containing the sulfur element to form gaseous sulfur dioxide, thereby removing at least a part of the impurities derived from SO₄. This reaction is represented by the following reaction formula.

SO₄ + S → 2SO₂↑

In addition, it is considered that an occurrence of such a reaction in the melt produces a bubbling effect, which has an effect of making the melt more homogeneous. If the melt becomes more homogeneous, the obtained sulfide-based solid electrolyte will also be more homogeneous, which is expected to improve the lithium-ion conductivity.

Thus, in the related art, it has been difficult to reuse the aqueous solution containing the predetermined amount or more of impurities, such as the specific aqueous solution, unless the impurities are separated or the lithium component is concentrated by the membrane separation or the like. However, according to the present invention, the lithium source obtained by using the specific aqueous solution can be directly used as the raw material to produce the sulfide-based solid electrolyte. Therefore, there is no need for a purification treatment performed by the membrane separation, and lithium can be reused efficiently.

In the specific aqueous solution, the ratio of SO₄ to Li is 0.1 mol% or more, preferably 0.1 mol% to 10 mol%, more preferably 0.5 mol% to 5 mol%, and still more preferably 1 mol% to 2 mol%. Here, the ratio of SO₄ is 0.1 mol% or more, preferably 0.5 mol% or more, and more preferably 1 mol% or more. Accordingly, this makes it easier to treat the extraction liquid obtained by immersing the processed product of the used lithium-ion secondary battery in the water, and facilitates more efficient reuse of lithium. On the other hand, the ratio of SO₄ to Li in the specific aqueous solution is preferably 10 mol% or less, more preferably 5 mol% or less, and still more preferably 2 mol% or less, from the viewpoint of preventing the amount of the required sulfur element from becoming excessively large in a heating and melting step to be described below.

The specific aqueous solution preferably further contains Al. A ratio of Al to Li is preferably 0.01 mol% to 5 mol%, more preferably 0.1 mol% to 2 mol%, and still more preferably 0.3 mol% to 1 mol%. Here, Al is a component that originates from electrodes of the lithium-ion secondary battery and can be contained in the extraction liquid. Further, when the specific aqueous solution contains Al, the lithium source obtained from the specific aqueous solution may contain Al₂O₃, and oxides such as Al₂O₃ may improve crystallinity of the sulfide-based solid electrolyte. From these viewpoints, in the specific aqueous solution, the ratio of Al to Li is preferably 0.01 mol% or more, more preferably 0.1 mol% or more, and still more preferably 0.3 mol% or more. On the other hand, the ratio of Al to Li in the specific aqueous solution is preferably 5 mol% or less, more preferably 2 mol% or less, and still more preferably 1 mol% or less, from the viewpoint of ease of preparation of the specific aqueous solution.

Al in the specific aqueous solution is not limited to that derived from the extraction liquid, and may be that intentionally added in order to obtain the above-mentioned effect.

The specific aqueous solution preferably further contains F. A ratio of F to Li is preferably 0.01 mol% to 15 mol%, more preferably 0.1 mol% to 10 mol%, and still more preferably 1 mol% to 5 mol%. Here, F is a component that originates from electrolytes such as LiPF₆ in the lithium-ion secondary battery and can be contained in the extraction liquid. Further, when the sulfide-based solid electrolyte contains F, the oxidation resistance of the sulfide-based solid electrolyte may be improved. From these viewpoints, in the specific aqueous solution, the ratio of F to Li is preferably 0.01 mol% or more, more preferably 0.1 mol% or more, and still more preferably 1 mol% or more. On the other hand, from the viewpoint of ease of preparation, the ratio of F to Li in the specific aqueous solution is preferably 15 mol% or less, more preferably 10 mol% or less, and still more preferably 5 mol% or less.

F in the specific aqueous solution is not limited to that derived from the extraction liquid, and may be that intentionally added in order to obtain the above-mentioned effect.

That is, it is preferable that the specific aqueous solution further contains at least one of Al and F, and it is preferable that the ratio of Al to Li or the ratio of F to Li in the specific aqueous solution is 0.01 mol% or more. According to the present production method, in addition to the raw material being melted, the above-mentioned bubbling effect can also be obtained, so that when it is desired to contain at least one of Al and F in the sulfide-based solid electrolyte, these can be contained more homogeneously.

The specific aqueous solution may consist of an extraction liquid obtained by immersing the processed product of the used lithium-ion secondary battery in the water, or may be an aqueous solution containing the extraction liquid.

For example, the specific aqueous solution may be one obtained by adjusting a content ratio of one or more components selected from the group consisting of SO₄, Al, and F to Li in the extraction liquid. Specific methods for adjusting the content ratio of one or more components selected from the group consisting of SO₄, Al, and F to Li include, for example, a method of adding a Al-containing substance, an F-containing substance, a Li-containing substance, and the like to the extraction liquid, and a method of mixing the extraction liquid with a solution having a different concentration of a specific component compared to the extraction liquid.

The above-mentioned extraction liquid may contain PO₄ derived from the electrolytes such as LiPF₆. However, according to the present production method, even if the raw material contains the impurities derived from PO₄, the influence of the impurities can be prevented, and it is believed that a sulfide-based solid electrolyte having excellent lithium-ion conductivity can be obtained. That is, when the raw material contains the impurities derived from PO₄, the homogenization of the melt may be hindered, and the synthesis of the sulfide-based solid electrolyte may be hindered accordingly. On the other hand, in the present production method, the bubbling effect that occurs during the heating and melting step promotes the homogenization of the melt, making it possible to counteract or reduce the above-mentioned influence of the impurities derived from PO₄. Accordingly, in the specific aqueous solution, a content ratio of PO₄ may be, for example, 0.1 mol% or more to Li.

The various components contained in the specific aqueous solution, such as Li, SO₄, Al, F, and PO₄, are typically contained in the specific aqueous solution in the form of ions. The form of the ions is not particularly limited, and each component may form an ion alone or may form a complex ion or the like. For example, Li, SO₄, Al, F and PO₄ can be Li⁺, SO₄²⁻, Al(OH)₄⁻, F⁻ and PO₄³⁻, respectively, in the specific aqueous solution.

### (Lithium Halide-containing Composition)

Although the raw material used in the production of the sulfide-based solid electrolyte have been described in detail above in (Raw Material), (Lithium Source), and (Specific Aqueous Solution), the present invention also relates to a lithium halide-containing composition.

That is, the lithium halide-containing composition according to the present embodiment is a composition containing a lithium halide, contains 10 mass% or less of SO₄, and is used for producing the sulfide-based solid electrolyte.

The lithium halide-containing composition is effective as the lithium source, but may also be used as a halogen-containing raw material, a sulfur-containing raw material, or a raw material serving both purposes.

As the lithium halide, LiCl, LiBr, and LiI are more preferable as described above. These compounds may be used alone or in combination of two or more kinds thereof.

The composition contains SO₄ in an amount of 10 mass% or less, preferably 0.01 mass% to 10 mass%, more preferably 0.02 mass% to 5 mass%, and still more preferably 0.03 mass% to 5 mass%. Here, in order to avoid an excessive decrease in the amount of a lithium halide component in the composition, the content of SO₄ is 10 mass% or less, and preferably 5 mass% or less. In addition, from the viewpoint of obtaining a sufficient homogenizing effect by SO₄, the content of SO₄ is preferably 0.01 mass% or more, more preferably 0.02 mass% or more, and still more preferably 0.03 mass% or more.

For the content of SO₄, as described above in the (Specific Aqueous Solution), the ratio of SO₄ to Li is preferably 0.1 mol% to 10 mol%, more preferably 0.5 mol% to 5 mol%, and still more preferably 1 mol% to 2 mol%. Here, the above ratio is preferably 0.1 mol% or more, more preferably 0.5 mol% or more, and still more preferably 1 mol% or more. Accordingly, this makes it easier to treat the extraction liquid obtained by immersing the processed product of the used lithium-ion secondary battery in the water, and facilitates more efficient reuse of lithium. On the other hand, the ratio of SO₄ to Li is preferably 10 mol% or less, more preferably 5 mol% or less, and still more preferably 2 mol% or less, from the viewpoint of preventing the amount of the required sulfur element from becoming excessively large in the heating and melting step to be described below.

SO₄ refers to those contained that are derived from SO₄ (SO₄²⁻) in an aqueous solution, such as SO₄ in Li₂SO₄.

In the lithium halide-containing composition, the halogen element constituting the lithium halide is preferably a halogen element other than F, and the lithium halide-containing composition preferably further contains at least one of Al and F. Here, the lithium halide in which the constituent halogen element is the halogen element other than F is preferably, for example, LiCl, LiBr, or LiI.

Al is a component that originates from electrodes of the lithium-ion secondary battery and can be contained in the extraction liquid. Further, the oxide such as Al₂O₃, which is an example of an Al source, may improve the crystallinity of the sulfide-based solid electrolyte.

F is a component that originates from the electrolytes such as LiPF₆ in the lithium-ion secondary battery and can be contained in the extraction liquid. Further, when F is contained, the oxidation resistance of the sulfide-based solid electrolyte may be improved.

In the lithium halide-containing composition, the ratio of Al to Li is preferably 0.01 mol% to 5 mol%, more preferably 0.1 mol% to 2 mol%, and still more preferably 0.3 mol% to 1 mol%. Here, the ratio of Al is preferably 0.01 mol% or more, more preferably 0.1 mol% or more, and still more preferably 0.3 mol% or more. On the other hand, the ratio of Al to Li is preferably 5 mol% or less, more preferably 2 mol% or less, and still more preferably 1 mol% or less, from the viewpoint of avoiding the excessive decrease in the amount of the lithium halide component in the composition.

In the lithium halide-containing composition, the ratio of F to Li is preferably 0.01 mol% to 15 mol%, more preferably 0.1 mol% to 10 mol%, and still more preferably 1 mol% to 5 mol%. Here, the ratio of F is preferably 0.01 mol% or more, more preferably 0.1 mol% or more, and still more preferably 1 mol% or more. On the other hand, from the viewpoint of ease of preparation, the ratio of F to Li is preferably 15 mol% or less, more preferably 10 mol% or less, and still more preferably 5 mol% or less.

### (Lithium Sulfide-containing Composition)

Although the raw material used in the production of the sulfide-based solid electrolyte have been described in detail above in (Raw Material), (Lithium Source), and (Specific Aqueous Solution), the present invention also relates to a lithium sulfide-containing composition.

That is, the lithium sulfide-containing composition according to the present embodiment is a composition containing lithium sulfide, contains 10 mass% or less of SO₄, and is used for producing the sulfide-based solid electrolyte.

The lithium sulfide-containing composition is effective as the lithium source, but may also be used as the raw material containing S.

The composition contains SO₄ in an amount of more than 0.5 mass% and 10 mass% or less, preferably 0.51 mass% to 5 mass%, and more preferably 0.8 mass% to 3 mass%. Here, from the viewpoint of avoiding the excessive decrease in the lithium sulfide component in the composition, the content of SO₄ is 10 mass% or less, preferably 5 mass% or less, and more preferably 3 mass% or less. Further, from the viewpoint of obtaining the sufficient homogenizing effect by SO₄, the content of SO₄ is more than 0.5 mass%, preferably 0.51 mass% or more, and more preferably 0.8 mass% or more.

For the content of SO₄, as described above in the (Specific Aqueous Solution), a ratio of SO₄ to Li is preferably 0.1 mol% to 10 mol%, more preferably 0.5 mol% to 5 mol%, and still more preferably 1 mol% to 2 mol%. Here, the above ratio is preferably 0.1 mol% or more, more preferably 0.5 mol% or more, and still more preferably 1 mol% or more. Accordingly, this makes it easier to treat the extraction liquid obtained by immersing the processed product of the used lithium-ion secondary battery in the water, and facilitates more efficient reuse of lithium. On the other hand, the ratio of SO₄ to Li is preferably 10 mol% or less, more preferably 5 mol% or less, and still more preferably 2 mol% or less, from the viewpoint of preventing the amount of the required sulfur element from becoming excessively large in the heating and melting step to be described below.

SO₄ refers to those contained that are derived from SO₄ (SO₄²⁻) in the aqueous solution, such as SO₄ in Li₂SO₄.

The lithium sulfide-containing composition preferably further contains at least one of Al and F.

Al is a component that originates from the electrodes of the lithium-ion secondary battery and can be contained in the extraction liquid. Further, the oxide such as Al₂O₃, which is an example of the Al source, may improve the crystallinity of the sulfide-based solid electrolyte.

F is a component that originates from the electrolytes such as LiPF₆ in the lithium-ion secondary battery and can be contained in the extraction liquid. Further, when F is contained, the oxidation resistance of the sulfide-based solid electrolyte may be improved.

In the lithium sulfide-containing composition, the ratio of Al to Li is preferably 0.01 mol% to 5 mol%, more preferably 0.1 mol% to 2 mol%, and still more preferably 0.3 mol% to 1 mol%. Here, the ratio of Al is preferably 0.01 mol% or more, more preferably 0.1 mol% or more, and still more preferably 0.3 mol% or more. On the other hand, the ratio of Al to Li is preferably 5 mol% or less, more preferably 2 mol% or less, and still more preferably 1 mol% or less, from the viewpoint of avoiding the excessive decrease in the amount of the lithium sulfide component in the composition.

In the lithium sulfide-containing composition, the ratio of F to Li is preferably 0.01 mol% to 15 mol%, more preferably 0.1 mol% to 10 mol%, and still more preferably 1 mol% to 5 mol%. Here, the ratio of F is preferably 0.01 mol% or more, more preferably 0.1 mol% or more, and still more preferably 1 mol% or more. On the other hand, from the viewpoint of ease of preparation, the ratio of F to Li is preferably 15 mol% or less, more preferably 10 mol% or less, and still more preferably 5 mol% or less.

### (Method for Producing Sulfide-based Solid Electrolyte)

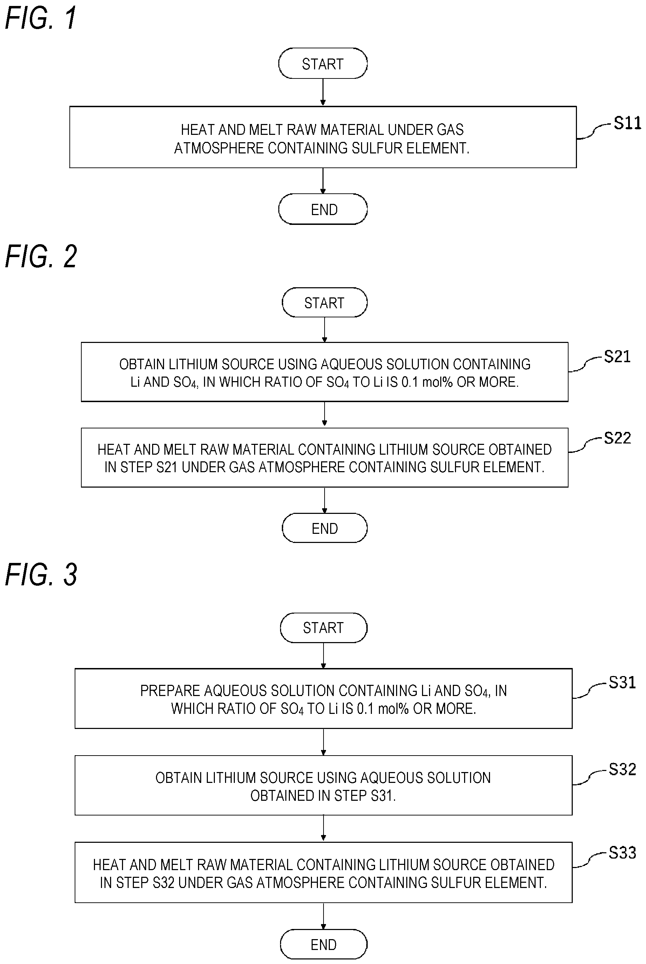

FIG. 1 is a flowchart illustrating the present production method. That is, the present production method includes at least step S11 of heating and melting the raw material under the gas atmosphere containing the sulfur element. The raw material used in step S11 includes the lithium source obtained by using the aqueous solution containing Li and SO₄, and the ratio of SO₄ to Li in such an aqueous solution is 0.1 mol% or more. This step S11 corresponds to the heating and melting step which is described in detail later.

The present production method may further include obtaining the lithium source using the aqueous solution containing Li and SO₄, in which the ratio of SO₄ to Li is 0.1 mol% or more. FIG. 2 is a flowchart illustrating the present production method in this case. The production method illustrated in FIG. 2 includes step S21 of obtaining the lithium source using the aqueous solution containing Li and SO₄, in which the ratio of SO₄ to Li is 0.1 mol% or more, and step S22 of heating and melting the raw material containing the lithium source obtained in step S21 under the gas atmosphere containing the sulfur element.

The present production method may further include preparing the aqueous solution used in step S21. FIG. 3 is a flowchart illustrating the present production method in this case. The production method illustrated in FIG. 3 includes step S31 of preparing the aqueous solution containing Li and SO₄, in which the ratio of SO₄ to Li is 0.1 mol% or more, step S32 of obtaining the lithium source using the aqueous solution obtained in step S31, and step S33 of heating and melting a raw material containing the lithium source obtained in step S32 under the gas atmosphere containing the sulfur element. A specific method of step S31 is not particularly limited, and step S31 may include, for example, immersing the processed product of the used lithium-ion secondary battery in the water to obtain the extraction liquid, adjusting the content ratio of one or more components selected from the group consisting of SO₄, Al, and F to Li in the extraction liquid, or the like. When the extraction liquid is used in step S31, the extraction liquid may be one that has been prepared in advance.

### (Heating and Melting Step)

The present production method includes heating and melting the raw material including the lithium source described above under the gas atmosphere containing the sulfur element (heating and melting step).

The heating and melting can be carried out, for example, by placing the raw material in a heating furnace or a heat-resistant container and heating the heating furnace or the heat-resistant container. Further, the heat-resistant container may be placed in the heating furnace, and the raw material may be placed in the heat-resistant container.

The heat-resistant container is not particularly limited, and examples thereof include a heat-resistant container made of carbon, a heat-resistant container containing an oxide such as silica, a silica glass, a borosilicate glass, an aluminosilicate glass, alumina, zirconia, and mullite, a heat-resistant container containing a nitride such as silicon nitride and boron nitride, and a heat-resistant container containing a carbide such as silicon carbide. Further, these heat-resistant containers may have a bulk formed of the above-described material, or may be a container in which a layer of carbon, an oxide, a nitride, a carbide, or the like is formed. The heating may be performed in a vacuum-sealed state.

A method of charging the raw material into the heating furnace or the heat-resistant container is not particularly limited, and can be appropriately selected from known methods depending on the desired production method or the like. The raw material may be fed in a constant amount continuously or in a predetermined amount intermittently.

The method of heating the heating furnace or the heat-resistant container is not particularly limited, and may be a known heating method using an external heating device or the like. Hereinafter, containers used in the heating and melting step, such as a heating furnace and a heat-resistant container, may be collectively referred to simply as heating furnaces.

A heating temperature in the heating and melting step is preferably 600°C to 900°C, more preferably 650°C to 850°C, and still more preferably 700°C to 800°C. Here, the heating temperature is preferably 600°C or higher, more preferably 650°C or higher, and still more preferably 700°C or higher. It is preferable that the heating temperature is equal to or higher than the above value so that the raw material can be easily melted at this temperature. Further, the above value or more is preferable since the reaction, that is, SO₄ + S → 2SO₂↑ is promoted. The heating temperature is preferably 900°C or lower, more preferably 850°C or lower, and still more preferably 800°C or lower. It is preferable that the heating temperature is equal to or lower than the above value so that an amount of components eliminated from the raw material during the heating and melting is unlikely to become excessive.

A time for heating and melting is preferably 0.1 hours to 100 hours, more preferably from 0.5 hours to 50 hours, still more preferably from 0.7 hours to 24 hours, and yet still more preferably from 1 hour to 24 hours. Here, the time for heating and melting is preferably 0.1 hours or more, more preferably 0.5 hours or more, still more preferably 0.7 hours or more, and even more preferably 1 hour or more from the viewpoint of improving the homogeneity of the melt and the obtained sulfide-based solid electrolyte. As long as the deterioration or decomposition of the components in the melt due to heating is within an acceptable range, there is no particular upper limit to the time for heating and melting, and the time may be relatively long. As a practical range, 100 hours or less is preferable, 50 hours or less is more preferable, and 24 hours or less is still more preferable. As described above, the heating and melting may be performed continuously or in a batch manner.

A pressure during the heating and melting is not particularly limited, but a normal pressure or a slight pressure is preferred, and a normal pressure is more preferred.

The heating and melting step is carried out under the gas atmosphere containing the sulfur element. Since the melt obtained by melting the raw material is placed under the gas atmosphere containing the sulfur element, as described above, SO₄ (or PO₄) in the melt can be reacted with sulfur in the melt or in the gas atmosphere containing the sulfur element, and can be removed as a gas. In addition, by carrying out the heating and melting under the gas atmosphere containing the sulfur element, it is possible to prevent volatilization of the sulfur components into the gas atmosphere containing the sulfur element, which has a relatively high sulfur partial pressure. Accordingly, the composition of the obtained sulfide-based solid electrolyte is easier to control.

An example of a method for forming the gas atmosphere containing the sulfur element in the heating furnace is to introduce a component containing a sulfur element into the heating furnace. More specifically, the method includes at least one of introducing a gas containing a sulfur element and introducing a solid containing a sulfur element into the heating furnace, and mixing an excess amount of a solid containing a sulfur element with a raw material. When the component containing the sulfur element is introduced into the heating furnace, a timing of the introduction may be after the raw material is placed in the container in advance and heated to obtain a melt, or the introduction may be performed at the same time as the raw material is placed in the container.

Examples of the method for introducing the gas containing the sulfur element include a method for introducing, into the heating furnace, a gas containing a sulfur element prepared in advance outside the heating furnace. The method for preparing the gas containing the sulfur element outside the heating furnace is not particularly limited. For example, it is preferable to heat a sulfur source outside the heating furnace to obtain the gas containing the sulfur element.

The sulfur source is not particularly limited as long as it is elemental sulfur or a sulfur compound from which the gas containing the sulfur element can be obtained by heating, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and rubber subjected to a sulfur vulcanization treatment.

For example, these sulfur sources are heated in a sulfur source heating portion that is separately provided to generate the gas containing the sulfur element, and the gas can be transported to the heating furnace using an inert gas such as a N₂ gas, an argon gas, and a helium gas as a carrier gas to form the gas atmosphere containing the sulfur element in the heating furnace.

A temperature at which the sulfur source is heated can be appropriately selected depending on the type of the used sulfur source. For example, when the sulfur source is elemental sulfur, the temperature at which the sulfur source is heated is preferably 200°C to 450°C.

Alternatively, the gas atmosphere containing the sulfur element may be formed in the heating furnace by introducing the solid containing the sulfur element into the heating furnace. In this case, the gas containing the sulfur element is obtained by heating the solid containing the sulfur element in the heating furnace, and the gas atmosphere containing the sulfur element can be formed. Examples of the solid containing the sulfur element include solid sulfur sources such as elemental sulfur, H₂S, Bi₂S₃, iron sulfides, copper sulfides, and CS₂. For example, such a solid sulfur source is pneumatically transported in a fine state such as a powder to the heating portion by a carrier gas, so that the solid containing the sulfur element is introduced into the heating furnace.

Alternatively, the gas atmosphere containing the sulfur element may be formed in the heating furnace by mixing an excess amount of the solid containing the sulfur element with the raw material. In this case, the gas containing the sulfur element is also obtained by heating the solid containing the sulfur element in the heating furnace, and the gas atmosphere containing the sulfur element can be formed. As the solid containing the sulfur element, the same solid containing a sulfur element as that introduced into the heating furnace is used. Mixing the excess amount of solid containing the sulfur element with the raw material means mixing a solid containing a sulfur element with a raw material such that a ratio of the sulfur element is excessive compared to the case where a composition ratio of elements in the raw material is adjusted taking into consideration only the composition of the desired sulfide-based solid electrolyte.

In the gas atmosphere containing the sulfur element, the sulfur partial pressure is preferably set to 10⁻³ to 10⁰ atm. By setting such a sulfur partial pressure in this range, sulfur can be introduced efficiently at a low cost without complicating the apparatus.

In the heating furnace, from the viewpoint of preventing side reactions with water vapor, oxygen, and the like, the dew point is preferably -20°C or lower. The lower limit is not particularly limited, and is generally about -80°C. The oxygen concentration is preferably 1,000 ppm (volume basis) or less.

### (Cooling Step)

The present production method preferably further includes a step of cooling the melt obtained by heating and melting to obtain a solid. The cooling may be performed by a known method, and the method is not particularly limited. After the heating and melting step, the cooling may be continued in the heating furnace, or the melt may be removed from the heating furnace and then cooled. When the melt is removed from the heating furnace and cooled, for example, the melt is discharged from the sulfide-based solid electrolyte discharge portion.

Examples of a more specific cooling method include a method in which the melt is poured onto a plate-like body made of carbon or the like and then cooled, and a method in which the melt is poured into a narrow gap to be formed into a thin shape. When the melt is poured onto a plate-like body and then cooled, it is preferable that a thickness of the melt after being poured and a thickness of the resulting solid are relatively thin, from the viewpoint of improving the cooling efficiency. Specifically, the thickness is preferably 10 mm or less, and more preferably 5 mm or less. A lower limit of the thickness is not particularly limited, but may be 0.01 mm or more, or may be 0.02 mm or more. When the melt is poured into a narrow gap to be formed into a thin shape, the cooling efficiency is excellent, and a solid in a flake form, fiber form, or powder form can be obtained. The obtained solid can be obtained in any shape by being crushed into pieces of a size that is easy to handle. Among these shapes, a solid in a shape of a block is preferred since it is easier to recover. The "block" also includes a plate-like, flake-like, and fiber-like shapes.

A cooling rate is preferably 0.01°C/sec or more, more preferably 0.05°C/sec or more, and still more preferably 0.1°C/sec or more, from the viewpoint of maintaining the composition obtained by the heating and melting step. An upper limit value of the cooling rate is not particularly determined, and a cooling rate of a twin-roller, whose rapid cooling rate is generally said to be the highest, is 1,000,000°C/sec or less.

Here, in the case where the obtained solid is desired to be an amorphous sulfide-based solid electrolyte, it is preferable to obtain a solid by rapidly cooling the melt obtained by heating and melting. Specifically, the cooling rate in the case of rapid cooling is preferably 10°C/sec or more, more preferably 100°C/sec or more, still more preferably 500°C/sec or more, and even more preferably 700°C/sec or more. An upper limit value of the cooling rate is not particularly limited, and a cooling rate of a twin-roller, whose rapid cooling rate is generally said to be the highest, is 1,000,000°C/sec or less.

On the other hand, it is also possible to obtain a sulfide-based solid electrolyte having a specific crystal structure or a sulfide-based solid electrolyte constituted by a crystal phase and an amorphous phase by performing a slow cooling in the cooling step to crystallize at least a part of the solid. A cooling rate in the case of the slow cooling is preferably 0.01°C/sec to 500°C/sec, and more preferably 0.05°C/sec to 450°C/sec. Here, the cooling rate is preferably 0.01°C/sec or more, and more preferably 0.05°C/sec or more. The cooling rate is preferably 500°C/sec or less, and more preferably 450°C/sec or less. The cooling rate may be less than 10°C/sec, or may be 5°C/sec or less. The cooling rate may be appropriately adjusted according to crystallization conditions.

Here, crystals contained in the sulfide-based solid electrolyte are preferably ion-conductive crystals. Specifically, the ion-conductive crystal is a crystal having a lithium-ion conductivity of more than 10⁻⁴ S/cm, and more preferably more than 10⁻³ S/cm.

When it is desired that the solid obtained after cooling is a sulfide-based solid electrolyte containing a crystal phase, it is preferable that the melt obtained in the heating and melting step contains a compound that serves as a crystal nucleus. In this way, it is easier for crystals to precipitate in the cooling step. A method for containing a compound that serves as a crystal nucleus in the melt is not particularly limited, but examples thereof include a method of adding a compound that serves as a crystal nucleus to the raw material or a heated raw material, and a method of adding a compound that serves as a crystal nucleus to the melt during heating and melting.

Examples of the compound that serves as the crystal nucleus include oxides, oxynitrides, nitrides, carbides, other chalcogen compounds, and halides. The compound that serves as a crystal nucleus is preferably a compound having a certain degree of compatibility with the melt. A compound that is completely incompatible with the melt cannot serve as a crystal nucleus.

When it is desired that the solid obtained after cooling is a sulfide-based solid electrolyte containing a crystal phase, a content of the compound that serves as the crystal nucleus in the melt is preferably 0.01 mass% to 20 mass%, more preferably 0.1 mass% to 10 mass%, and still more preferably 1 mass% to 10 mass%. Here, the content is preferably 0.01 mass% or more, more preferably 0.1 mass% or more, and still more preferably 1 mass% or more. On the other hand, from the viewpoint of preventing a decrease in the lithium-ion conductivity, the content of the compound that serves as the crystal nucleus in the melt is preferably 20 mass% or less, and more preferably 10 mass% or less.

If it is desired that the solid obtained after cooling is an amorphous sulfide-based solid electrolyte, it is preferable that the melt does not contain any compound that serves as a crystal nucleus, or that a content of the compound is a predetermined amount or less. Specifically, the content of the compound that serves as a crystal nucleus in the melt is preferably 1 mass% or less, and more preferably 0.1 mass% or less. The content of the compound that serves as a crystal nucleus in the melt may be less than 0.01 mass%.

The present production method may further include a step of subjecting the sulfide-based solid electrolyte obtained by cooling the melt to a known post-treatment or the like. Examples of the post-treatment step include a step of further heat treating the sulfide-based solid electrolyte from the viewpoint of obtaining desired characteristics, promoting the crystallization, and the like, and a step of pulverizing the sulfide-based solid electrolyte from the viewpoint of obtaining a desired shape.

The lithium-ion conductivity of the sulfide-based solid electrolyte obtained by the present production method is not particularly limited since the lithium-ion conductivity varies depending on a composition thereof, but from the viewpoint of improving the battery characteristics when the present invention is used for lithium-ion secondary batteries, the lithium-ion conductivity is preferably 2.0 × 10⁻³ S/cm or more, more preferably 3.0 × 10⁻³ S/cm, and still more preferably 4.0 × 10⁻³ S/cm at 25°C. More preferably, when the sulfide-based solid electrolyte to be measured is made into a powder having an average particle diameter of 10 µm and compressed under a pressure of 380 MPa to form a powder compact, the lithium-ion conductivity measured at 25°C is in the above-mentioned range.

According to the present production method, even when a raw material contains a predetermined amount of the impurities as described above, the influence of the impurities is prevented, and the sulfide-based solid electrolyte can be suitably produced. Accordingly, the lithium source obtained from the aqueous solution containing lithium and the impurities can be used directly as the raw material to produce the sulfide-based solid electrolyte. Since there is no need for the purification treatment such as membrane separation of the aqueous solution, lithium can be reused efficiently. The sulfide-based solid electrolyte obtained by the present production method is suitably used as a solid electrolyte material for use in, for example, lithium-ion secondary batteries.

### EXAMPLES

Hereinafter, the present invention is described in detail with reference to Examples, but the present invention is not limited thereto. Examples 2 and 4 to 15 are inventive examples, and Examples 1 and 3 are comparative examples.

### (Preparation of Extraction Liquid)

A used lithium-ion secondary battery was fired, and an obtained processed product was immersed in water to obtain an extraction liquid. The extraction liquid contained Li, Al, F and SO₄, and a Li concentration in the extraction liquid was 3017 mg/L, an Al concentration was 80.3 mg/L, an F concentration was 219.2 mg/L, and a SO₄ concentration was 305.7 mg/L. Further, in the extraction liquid, a content ratio of SO₄ to Li was 0.73 mol%, a content ratio of Al to Li was 0.68 mol%, and a content ratio of F to Li was 2.65 mol%.

### (Example 1)

The extraction liquid was subjected to a purification treatment using a lithium selective permeation membrane in accordance with the method described in Patent Literature 2, to obtain a lithium-containing aqueous solution containing no impurities. By an analysis, it was found that the aqueous solution did not contain SO₄, Al, or F. A time required for the purification treatment was 14 days.

From the above aqueous solution, lithium bromide was obtained as a lithium source. Specifically, first, carbonic acid was blown into the aqueous solution to precipitate lithium as lithium carbonate. Conditions for the precipitation were pH: about 7 and temperature: 85°C. The precipitated lithium carbonate was recovered by solid-liquid separation. Further, recovered lithium carbonate was reacted with hydrobromic acid to synthesize lithium bromide. Hydrobromic acid used was a 48 mass% aqueous solution manufactured by Kanto Chemical Co., Inc. An obtained lithium bromide aqueous solution was placed in a vibration drying device (product name: VH type, manufactured by CHUO KAKOHKI CO., LTD.) and dried by heating under a reduced pressure at a maximum temperature of 160°C to obtain lithium bromide. Obtained lithium bromide was pulverized in a mortar to obtain a powder.

Next, under a dry nitrogen atmosphere, a lithium sulfide powder (manufactured by Sigma, purity: 99.98%), a phosphorus pentasulfide powder (manufactured by Sigma, purity: 99%), a lithium chloride powder (manufactured by Sigma, purity: 99.99%), and a lithium bromide powder prepared by synthesis were weighed and mixed to have a composition ratio of Li_{5.5}PS_{4.3}Cl_{0.8}Br_{0.8}.

The mixture was placed in a heat-resistant container and heated and melted under conditions of a pressure of 1 atmosphere and a temperature of 750°C for 0.5 hours. At this time, a sulfur gas obtained by heating elemental sulfur at a temperature of 350°C was supplied so that a partial pressure of the sulfur gas became 0.1 atm while accompanying N₂ as a carrier gas to obtain a gas atmosphere containing a sulfur element, and sulfur was introduced into the melt by performing heating and melting under the gas atmosphere. The content of the sulfur gas in the gas atmosphere containing the sulfur element was 0.1 vol%.

Thereafter, cooling was performed at a cooling rate of 1°C/sec to 1,000°C/sec to obtain a solid as a sulfide-based solid electrolyte containing an amorphous phase and an argyrodite crystal phase. Next, the solid was crystallized at 450°C for 1 hour in the nitrogen gas atmosphere to obtain a sulfide-based solid electrolyte containing an argyrodite crystal.

### (Example 2)

A composition containing lithium bromide as a lithium source was obtained from the extraction liquid in the same manner as in Example 1, except that the extraction liquid was not subjected to a purification treatment. By an analysis, it was found that the obtained composition containing lithium bromide contained 0.17 mass% SO₄, 0.04 mass% Al, and 0.11 mass% F. The obtained lithium source was used as the raw material in the same manner as in Example 1, and a sulfide-based solid electrolyte containing an argyrodite crystal was obtained in the same manner as in Example 1.

### (Example 3)

Lithium bromide as a lithium source was obtained from the extraction liquid in the same manner as in Example 1, except that the extraction liquid was not subjected to a purification treatment.

Next, under a dry nitrogen atmosphere, a lithium sulfide powder (manufactured by Sigma, purity: 99.98%), a phosphorus pentasulfide powder (manufactured by Sigma, purity: 99%), a lithium chloride powder (manufactured by Sigma, purity: 99.99%), and a lithium bromide powder prepared by synthesis were weighed to have a composition ratio of Li_{5.5}PS_{4.3}Cl_{0.8}Br_{0.8}. These powders were mixed in a mixer in the same atmosphere, and then further mixed using a planetary ball mill (LP-M2, manufactured by ITO SEISAKUSHO CO., LTD.) to obtain a raw material mixture. The mixing by the planetary ball mill was performed at 400 rpm for 20 hours using a ball having a particle diameter of 10 mm. The obtained raw material mixture was vacuum-sealed in a quartz tube, heated and sintered at 450°C for 5 hours to precipitate an argyrodite crystal, thereby obtaining a sulfide-based solid electrolyte containing the argyrodite crystal.

### (Example 4)

A LiOH aqueous solution prepared from lithium hydroxide monohydrate (Sigma, purity: 99.95%) and distilled water was added to the extraction liquid to obtain an aqueous solution in which a content ratio of each component to Li was adjusted. In the obtained aqueous solution, a content ratio of SO₄ to Li was 0.15 mol%, a content ratio of Al to Li was 0.14 mol%, and a content ratio of F to Li was 0.53 mol%. A composition containing lithium bromide as a lithium source was obtained in the same manner as in Example 1, except that this aqueous solution was used. By an analysis, it was found that the obtained composition containing lithium bromide contained 0.03 mass% SO₄, 0.01 mass% Al, and 0.02 mass% F. The obtained lithium source was used as the raw material in the same manner as in Example 1, and a sulfide-based solid electrolyte containing an argyrodite crystal was obtained in the same manner as in Example 1.

### (Example 5)

Hydrofluoric acid was added to the extraction liquid to obtain an aqueous solution in which a content ratio of F to Li was adjusted. In the obtained aqueous solution, a content ratio of SO₄ to Li was 0.73 mol%, a content ratio of Al to Li was 0.68 mol%, and a content ratio of F to Li was 5.30 mol%. A composition containing lithium bromide as a lithium source was obtained in the same manner as in Example 1, except that this aqueous solution was used. By an analysis, it was found that the obtained composition containing lithium bromide contained 0.17 mass% SO₄, 0.04 mass% Al, and 0.21 mass% F. The obtained lithium source was used as the raw material in the same manner as in Example 1, and a sulfide-based solid electrolyte containing an argyrodite crystal was obtained in the same manner as in Example 1.

### (Example 6)

Hydrobromic acid was directly added to the extraction liquid used in (Example 2), which had not been subjected to a purification treatment, to prepare a lithium bromide aqueous solution. Hydrobromic acid used was a 48 mass% aqueous solution manufactured by Kanto Chemical Co., Inc. An obtained lithium bromide aqueous solution was placed in a vibration drying device (product name: VH type, manufactured by CHUO KAKOHKI CO., LTD.) and dried by heating under a reduced pressure at a maximum temperature of 160°C to obtain a composition containing lithium bromide. The obtained composition containing lithium bromide was pulverized in a mortar to obtain a powder.

By an analysis, it was found that the obtained composition containing lithium bromide contained 0.78 mass% SO₄, 0.20 mass% Al, and 0.56 mass% F. The obtained lithium source was used as the raw material in the same manner as in Example 1, and a sulfide-based solid electrolyte containing an argyrodite crystal was obtained in the same manner as in Example 1.

### (Example 7)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 0.10 mol% was prepared. Hydrobromic acid was directly added to the prepared specific aqueous solution to prepare a lithium bromide aqueous solution. Hydrobromic acid used was a 48 mass% aqueous solution manufactured by Kanto Chemical Co., Inc. An obtained lithium bromide aqueous solution was placed in a vibration drying device (product name: VH type, manufactured by CHUO KAKOHKI CO., LTD.) and dried by heating under a reduced pressure at a maximum temperature of 160°C to obtain a composition containing lithium bromide. The obtained composition containing lithium bromide was pulverized in a mortar to obtain a powder.

By an analysis, it was found that the obtained composition containing lithium bromide contained 0.11 mass% SO₄. The obtained lithium source was used as the raw material in the same manner as in Example 1, and a sulfide-based solid electrolyte containing an argyrodite crystal was obtained in the same manner as in Example 1.

### (Example 8)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 1.02 mol% was prepared. Hydrobromic acid was directly added to the prepared specific aqueous solution to prepare a lithium bromide aqueous solution. Hydrobromic acid used was a 48 mass% aqueous solution manufactured by Kanto Chemical Co., Inc. An obtained lithium bromide aqueous solution was placed in a vibration drying device (product name: VH type, manufactured by CHUO KAKOHKI CO., LTD.) and dried by heating under a reduced pressure at a maximum temperature of 160°C to obtain a composition containing lithium bromide. The obtained composition containing lithium bromide was pulverized in a mortar to obtain a powder.

By an analysis, it was found that the obtained composition containing lithium bromide contained 1.10 mass% SO₄. The obtained lithium source was used as the raw material in the same manner as in Example 1, and a sulfide-based solid electrolyte containing an argyrodite crystal was obtained in the same manner as in Example 1.

### (Example 9)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 5.12 mol% was prepared. Hydrobromic acid was directly added to the prepared specific aqueous solution to prepare a lithium bromide aqueous solution. Hydrobromic acid used was a 48 mass% aqueous solution manufactured by Kanto Chemical Co., Inc. An obtained lithium bromide aqueous solution was placed in a vibration drying device (product name: VH type, manufactured by CHUO KAKOHKI CO., LTD.) and dried by heating under a reduced pressure at a maximum temperature of 160°C to obtain a composition containing lithium bromide. The obtained composition containing lithium bromide was pulverized in a mortar to obtain a powder.

By an analysis, it was found that the obtained composition containing lithium bromide contained 5.00 mass% SO₄. The obtained lithium source was used as the raw material in the same manner as in Example 1, and a sulfide-based solid electrolyte containing an argyrodite crystal was obtained in the same manner as in Example 1.

### (Example 10)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 11.81 mol% was prepared. Hydrobromic acid was directly added to the prepared specific aqueous solution to prepare a lithium bromide aqueous solution. Hydrobromic acid used was a 48 mass% aqueous solution manufactured by Kanto Chemical Co., Inc. An obtained lithium bromide aqueous solution was placed in a vibration drying device (product name: VH type, manufactured by CHUO KAKOHKI CO., LTD.) and dried by heating under a reduced pressure at a maximum temperature of 160°C to obtain a composition containing lithium bromide. The obtained composition containing lithium bromide was pulverized in a mortar to obtain a powder.

By an analysis, it was found that the obtained composition containing lithium bromide contained 10.00 mass% SO₄. The obtained lithium source was used as the raw material in the same manner as in Example 1, and a sulfide-based solid electrolyte containing an argyrodite crystal was obtained in the same manner as in Example 1.

### (Example 11)

The extraction liquid used in (Example 2) that had not been subjected to a purification treatment was placed in a vibration drying device (product name: VH type, manufactured by CHUO KAKOHKI CO., LTD.) and dried by heating under a reduced pressure at a maximum temperature of 85°C to obtain lithium hydroxide. Obtained lithium hydroxide was pulverized in a mortar to obtain a powder.

Thereafter, the lithium hydroxide powder was placed in a vibration drying device (product name: VH type, manufactured by CHUO KAKOHKI CO., LTD.) and reacted at 200°C while introducing hydrogen sulfide therein, thereby obtaining a composition containing lithium sulfide.

By an analysis, it was found that the obtained composition containing lithium sulfide contained 2.94 mass% SO₄, 0.77 mass% Al, and 2.12 mass% F.

Next, under a dry nitrogen atmosphere, a phosphorus pentasulfide powder (manufactured by Sigma, purity: 99%), a lithium bromide powder (manufactured by Sigma, purity: 99.99%), a lithium chloride powder (manufactured by Sigma, purity: 99.99%), and a lithium sulfide powder prepared by synthesis were weighed and mixed to have a composition ratio of Li_{5.5}PS_{4.3}Cl_{0.8}Br_{0.8}.

The mixture was placed in a heat-resistant container and heated and melted under conditions of a pressure of 1 atmosphere and a temperature of 750°C for 0.5 hours. At this time, a sulfur gas obtained by heating the elemental sulfur at a temperature of 350°C was supplied so that the partial pressure of the sulfur gas became 0.1 atm while accompanying N₂ as a carrier gas to obtain a gas atmosphere containing the sulfur element, and sulfur was introduced into the melt by performing heating and melting under the gas atmosphere. The content of the sulfur gas in the gas atmosphere containing the sulfur element was 0.1 vol%.

Thereafter, cooling was performed at a cooling rate of 1°C/sec to 1,000°C/sec to obtain a solid as a sulfide-based solid electrolyte containing an amorphous phase and an argyrodite crystal phase. Next, the solid was crystallized at 450°C for 1 hour in the nitrogen gas atmosphere to obtain a sulfide-based solid electrolyte containing an argyrodite crystal.

### (Example 12)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 0.12 mol% was prepared. The obtained specific aqueous solution was placed in a vibration drying device (product name: VH type, manufactured by CHUO KAKOHKI CO., LTD.) and dried by heating under a reduced pressure at a maximum temperature of 85°C to obtain lithium hydroxide. Obtained lithium hydroxide was pulverized in a mortar to obtain a powder.

Thereafter, the lithium hydroxide powder was placed in a vibration drying device (product name: VH type, manufactured by CHUO KAKOHKI CO., LTD.) and reacted at 200°C while introducing hydrogen sulfide therein, thereby obtaining a composition containing lithium sulfide.

By an analysis, it was found that the obtained composition containing lithium sulfide contained 0.51 mass% SO₄.

The obtained lithium source was used as the raw material in the same manner as in Example 1, and a sulfide-based solid electrolyte containing an argyrodite crystal was obtained in the same manner as in Example 1.

### (Example 13)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 0.25 mol% was prepared. The obtained specific aqueous solution was placed in a vibration drying device (product name: VH type, manufactured by CHUO KAKOHKI CO., LTD.) and dried by heating under a reduced pressure at a maximum temperature of 85°C to obtain lithium hydroxide. Obtained lithium hydroxide was pulverized in a mortar to obtain a powder.

Thereafter, the lithium hydroxide powder was placed in a vibration drying device and reacted at 200°C while introducing hydrogen sulfide therein, thereby obtaining a composition containing lithium sulfide.

By an analysis, it was found that the obtained composition containing lithium sulfide contained 1.02 mass% SO₄.

The obtained lithium source was used as the raw material in the same manner as in Example 1, and a sulfide-based solid electrolyte containing an argyrodite crystal was obtained in the same manner as in Example 1.

### (Example 14)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 1.02 mol% was prepared. The obtained specific aqueous solution was placed in a vibration drying device (product name: VH type, manufactured by CHUO KAKOHKI CO., LTD.) and dried by heating under a reduced pressure at a maximum temperature of 85°C to obtain lithium hydroxide. Obtained lithium hydroxide was pulverized in a mortar to obtain a powder.

Thereafter, the lithium hydroxide powder was placed in a vibration drying device and reacted at 200°C while introducing hydrogen sulfide therein, thereby obtaining a composition containing lithium sulfide.

By an analysis, it was found that the obtained composition containing lithium sulfide contained 4.16 mass% SO₄.

The obtained lithium source was used as the raw material in the same manner as in Example 1, and a sulfide-based solid electrolyte containing an argyrodite crystal was obtained in the same manner as in Example 1.

### (Example 15)

Using lithium hydroxide monohydrate (manufactured by Sigma, purity: 99.95%), lithium sulfate (manufactured by Sigma, purity: 99.99%), and distilled water, a specific aqueous solution in which a content ratio of SO₄ to Li was 2.55 mol% was prepared. The obtained specific aqueous solution was placed in a vibration drying device (product name: VH type, manufactured by CHUO KAKOHKI CO., LTD.) and dried by heating under a reduced pressure at a maximum temperature of 85°C to obtain lithium hydroxide. Obtained lithium hydroxide was pulverized in a mortar to obtain a powder.

Thereafter, the lithium hydroxide powder was placed in a vibration drying device and reacted at 200°C while introducing hydrogen sulfide therein, thereby obtaining a composition containing lithium sulfide.

By an analysis, it was found that the obtained composition containing lithium sulfide contained 10.00 mass% SO₄.

The obtained lithium source was used as the raw material in the same manner as in Example 1, and a sulfide-based solid electrolyte containing an argyrodite crystal was obtained in the same manner as in Example 1.

### Examples 1 to 15 were evaluated as follows. Evaluation results are shown in Table 2. (Productivity Evaluation)

A time required to prepare the aqueous solution to obtain the lithium source from the extraction liquid was evaluated according to the following criteria. The preparation time did not include a time for obtaining the extraction liquid.
Acceptable: The time required to prepare the aqueous solution was less than one day.
Unacceptable: The time required to prepare the aqueous solution was one day or more.

### (Lithium-ion Conductivity Evaluation)

The sulfide-based solid electrolyte of each example was pulverized to obtain a sulfide-based solid electrolyte powder having an average particle diameter of 10 µm. The sulfide-based solid electrolyte powder was compressed under a pressure of 380 MPa to prepare a powder compact as a measurement sample, and measured by using an AC impedance measuring device (potentiostat/galvanostat VSP, manufactured by Bio-Logic Sciences Instruments).

The measurement conditions were as follows: a measurement frequency of 100 Hz to 1 MHz, a measurement voltage of 100 mV, and a measurement temperature of 25°C.

Acceptable: the lithium-ion conductivity was 2 mS/cm or more, which was at a practical level for use as a lithium-ion secondary battery.

Unacceptable: the lithium-ion conductivity was less than 2 mS/cm, which was a level difficult to put into practical use as a lithium-ion secondary battery.

### (Method for Measuring Amount of Impurities)

An amount of SO₄ and an amount of F in the aqueous solution were measured using an ion chromatograph, an amount of Al was measured using an ICP emission spectrometry, and an amount of Li was measured using an atomic absorption spectrophotometer.

Further, the amounts of SO₄, Al, and F contained in the obtained lithium compound were measured by preparing a solution using ultrapure water, the amounts of SO₄ and F were measured by using the ion chromatograph, the amount of Al was measured by using the ICP emission spectrometry, and the amount of Li was measured by using the atomic absorption spectrophotometer.

ICS-2000 manufactured by DIONEX was used for ion chromatograph measurement, Agilent 5800 manufactured by Agilent Technologies was used for ICP emission spectrometry, and Z-2300 manufactured by Hitachi High-Technologies Corporation was used for atomic absorption spectrometry.

A change in the amount of oxygen in the electrolyte sample prepared in (Example 15) was investigated. An analysis was carried out using an oxygen analyzer (manufactured by LECO Corporation). As a result, it was found that an oxygen content of the charged mixed raw material was 1.8 mass%, while an oxygen content of the synthesized sulfide solid electrolyte was 1.4 mass%, which was a decrease of 22%. This is believed to be because a part of SO₄ is converted to SO₂ and removed by heating and melting the raw material under the gas atmosphere containing the sulfur element. Further, it is considered that the bubbling effect during this process homogenized the composition, making it possible to synthesize an electrolyte having high conductivity.

**[Table 1]**

| | SO₄/Li mol% | Al/Li mol% | F/Li mol% | Productivity evaluation | Lithium compound obtained from aqueous solution | Lithium compound obtained using lithium compound obtained from aqueous solution | SO₄ mass% | Al mass% | F mass% | Lithium-ion conductivity evaluation mS/cm |
|---|---|---|---|---|---|---|---|---|---|---|
| Ex. 1 | < 0.1 | < 0.01 | < 0.01 | Unacceptable | Li₂CO₃ | LiBr | < 0.01 | < 0.001 | < 0.002 | 5.2 |
| Ex. 2 | 0.73 | 0.68 | 2.65 | Acceptable | Li₂CO₃ | LiBr | 0.17 | 0.04 | 0.11 | 5.8 |
| Ex. 3 | 0.73 | 0.68 | 2.65 | Acceptable | Li₂CO₃ | LiBr | 0.17 | 0.04 | 0.11 | 1.8 |
| Ex. 4 | 0.15 | 0.14 | 0.53 | Acceptable | Li₂CO₃ | LiBr | 0.03 | 0.01 | 0.02 | 6.0 |
| Ex. 5 | 0.73 | 0.68 | 5.30 | Acceptable | Li₂CO₃ | LiBr | 0.17 | 0.04 | 0.21 | 5.0 |
| Ex. 6 | 0.73 | 0.68 | 2.65 | Acceptable | LiBr | - | 0.78 | 0.20 | 0.56 | 4.2 |
| Ex. 7 | 0.10 | < 0.01 | < 0.01 | Acceptable | LiBr | - | 0.11 | < 0.001 | < 0.002 | 6.5 |
| Ex. 8 | 1.02 | < 0.01 | < 0.01 | Acceptable | LiBr | - | 1.10 | < 0.001 | < 0.002 | 6.8 |
| Ex. 9 | 5.12 | < 0.01 | < 0.01 | Acceptable | LiBr | - | 5.00 | < 0.001 | < 0.002 | 6.0 |
| Ex. 10 | 11.81 | < 0.01 | < 0.01 | Acceptable | LiBr | - | 10.00 | < 0.001 | < 0.002 | 4.9 |
| Ex. 11 | 0.73 | 0.68 | 2.65 | Acceptable | LiOH | Li₂S | 2.94 | 0.77 | 2.12 | 3.4 |
| Ex. 12 | 0.12 | < 0.01 | < 0.01 | Acceptable | LiOH | Li₂S | 0.51 | < 0.001 | < 0.002 | 6.5 |
| Ex. 13 | 0.25 | < 0.01 | < 0.01 | Acceptable | LiOH | Li₂S | 1.02 | < 0.001 | < 0.002 | 6.6 |
| Ex. 14 | 1.02 | < 0.01 | < 0.01 | Acceptable | LiOH | Li₂S | 4.16 | < 0.001 | < 0.002 | 5.9 |
| Ex. 15 | 2.55 | < 0.01 | < 0.01 | Acceptable | LiOH | Li₂S | 10.00 | < 0.001 | < 0.002 | 4.6 |

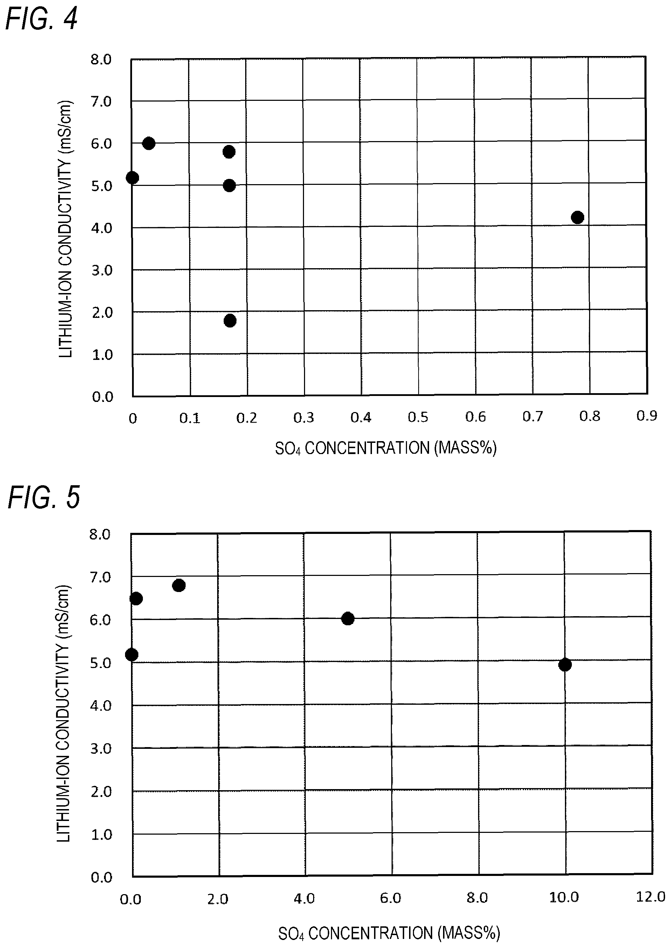

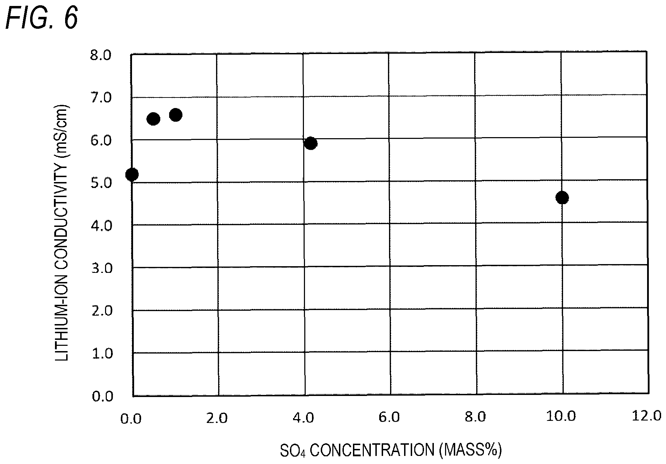

Results are shown in Table 1. Graphs showing a relationship between the SO₄ concentration in lithium bromide or lithium sulfide obtained in Examples 1 to 10 and Examples 12 to 15 and the lithium-ion conductivity of the sulfide-based solid electrolyte produced using the same are shown in FIGS. 4 to 6. Among these, FIG. 4 shows the results of Examples 1 to 6, FIG. 5 shows the results of Examples 1 and Examples 7 to 10, and FIG. 6 shows the results of Examples 1 and Examples 12 to 15.

From the above results, in each of the production methods of Examples 2 and 4 to 15, which were inventive examples, by producing the sulfide-based solid electrolyte by heating and melting the raw material under the gas atmosphere containing the sulfur element, a sulfide-based solid electrolyte having a practical level of characteristics for a lithium-ion secondary battery was obtained even when the lithium source obtained by using the aqueous solution containing Li and SO₄ in which the ratio of SO₄ to Li was 0.1 mol% or more was used as the raw material. Further, in each of the production methods of Examples 2 and 4 to 15, which were inventive examples, the time required for preparation of the aqueous solution for obtaining the lithium source was relatively short, and the productivity is excellent. On the other hand, in Example 1, the extraction liquid was subjected to the purification treatment to obtain the aqueous solution for obtaining the lithium source, and thus the sulfide-based solid electrolyte having a practical level of characteristics as the lithium-ion secondary battery was obtained, but the preparation of the aqueous solution took a long time, resulting in poor productivity. Further, in Example 3 in which the sulfide-based solid electrolyte was produced by the solid phase reaction, the sulfide-based solid electrolyte having a practical level of characteristics as the lithium-ion secondary battery was not obtained.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2022-073771) filed on April 27, 2022, the content of which is incorporated herein by reference.

## Claims

1. A method for producing a sulfide-based solid electrolyte, the method comprising
heating and melting a raw material under a gas atmosphere containing a sulfur element,
wherein the raw material comprises a lithium source obtained by using an aqueous solution comprising Li and SO₄, and
a ratio of SO₄ to Li is 0.1 mol% or more in the aqueous solution.

2. The method for producing a sulfide-based solid electrolyte according to claim 1,
wherein the aqueous solution further comprises at least one of Al and F, and
in the aqueous solution, at least one of a ratio of Al to Li and a ratio of F to Li is 0.01 mol% or more.

3. The method for producing a sulfide-based solid electrolyte according to claim 1 or 2, wherein the aqueous solution comprises an extraction liquid obtained by immersing a processed product of a used lithium-ion secondary battery in water.

4. The method for producing a sulfide-based solid electrolyte according to claim 3, wherein the aqueous solution is obtained by adjusting a content ratio of one or more components selected from the group consisting of SO₄, Al, and F to Li in the extraction liquid.

5. A method for producing a sulfide-based solid electrolyte, the method comprising:
obtaining a lithium source using an aqueous solution comprising Li and SO₄; and
heating and melting a raw material comprising the lithium source under a gas atmosphere containing a sulfur element,
wherein a ratio of SO₄ to Li is 0.1 mol% or more in the aqueous solution.

6. The method for producing a sulfide-based solid electrolyte according to claim 5,
wherein the aqueous solution further comprises at least one of Al and F, and
in the aqueous solution, at least one of a ratio of Al to Li and a ratio of F to Li is 0.01 mol% or more.

7. The method for producing a sulfide-based solid electrolyte according to claim 5 or 6, wherein the aqueous solution comprises an extraction liquid obtained by immersing a processed product of a used lithium-ion secondary battery in water.

8. The method for producing a sulfide-based solid electrolyte according to claim 7, further comprising preparing the aqueous solution,
wherein the preparation of the aqueous solution comprises adjusting a content ratio of one or more components selected from the group consisting of SO₄, Al, and F to Li in the extraction liquid.

9. A lithium halide-containing composition comprising a lithium halide,
wherein the lithium halide-containing composition comprises 10 mass% or less of SO₄, and is used for producing a sulfide-based solid electrolyte.

10. The lithium halide-containing composition according to claim 9,
wherein a halogen element constituting the lithium halide is a halogen element other than F, and
the lithium halide-containing composition further comprises at least one of Al and F.

11. A lithium sulfide-containing composition comprising a lithium sulfide,
wherein the lithium sulfide-containing composition comprises more than 0.5 mass% and 10 mass% or less of SO₄, and is used for producing a sulfide-based solid electrolyte.

12. The lithium sulfide-containing composition according to claim 11, comprising at least one of Al and F.
